# EUROPÄISCHE PATENTSCHRIFT

(11) **EP 4 198 147 B1**
(45) Veröffentlichungstag und Bekanntmachung des Hinweises auf die Patenterteilung: **08.07.2026**
(21) Anmeldenummer: 22213040.3
(22) Anmeldetag: 13.12.2022
(51) Int. Cl.: C21C 5/54, C21C 7/076

(54) **VERFAHREN ZUM HERSTELLEN EINER EISENBASIERTEN SCHMELZE IN EINEM ELEKTRISCHEN EINSCHMELZER**
METHOD FOR PRODUCING AN IRON-BASED MELT IN AN ELECTRIC MELTER
PROCÉDÉ DE PRODUCTION D'UNE MASSE FONDUE À BASE DE FER DANS UN FOUR ÉLECTRIQUE D'INFUSION

(30) Priorität: 17.12.2021 DE 102021133577
(43) Veröffentlichungstag der Anmeldung: 21.06.2023
(73) Patentinhaber: ThyssenKrupp Steel Europe AG, 47166 Duisburg (DE)
(72) Erfinder: Ahrenhold, Frank, 47051 Duisburg (DE); Becker, Roswitha, 47058 Duisburg (DE); Jäger, Nils, 45133 Essen (DE); Schubert, Daniel, 47057 Duisburg (DE); Weinberg, Matthias, 47809 Krefeld (DE)
(74) Vertreter: ThyssenKrupp Steel Europe AG

(56) Entgegenhaltungen:
- EP-A1- 3 375 764
- US-A1- 2021 301 359

## Beschreibung

Die Erfindung betrifft ein Verfahren zum Herstellen einer eisenbasierten Schmelze in einem elektrischen Einschmelzer.

Ein Verfahren zum Herstellen einer eisenbasierten Schmelze in einem elektrischen Einschmelzer ist beispielhaft in der DE 21 51 268 offenbart. Ein weiteres Verfahren ist aus der europäischen Anmeldung der Anmelderin mit der Anmeldenummer EP 20 190 705.2 bekannt.

Aus der WO 1999/000522 A1 ist ferner bekannt, ein Sauerstoffblas-Konvertergefäß mit einem Elektro-Lichtbogen-Ofengefäß zu kombinieren, wobei die im Bereich des Sauerstoffblas-Konvertergefäßes erzeugte Schlacke in den Bereich des Elektro-Lichtbogen-Ofengefäßes infolge des kombiniertes Aggregataufbaus überführt wird, wobei die Metallschmelze im Gegenstrom von dem Bereich des Elektro-Lichtbogen-Ofengefäßes kommend in den Bereich des Sauerstoffblas-Konvertergefäßes geführt wird. Da die beiden (Teil-)Gefäße als kombiniertes Aggregat einen gemeinsamen Reaktionsraum aufweisen, kann auch nur eine oxidierende Atmosphäre durch den Sauerstoffeintrag aus dem Bereich des Sauerstoffblas-Konvertergefäßes vorherrschen.

Schlacke, welche beim Erschmelzen zu eisenbasierter Schmelze im Elektro-Lichtbogenofen (EAF) und/oder bei sauerstoffbasierter Behandlung von eisenbasierter Schmelze im Konverter (BOF) infolge eines oxidierenden Einflusses anfällt, ist reich an in oxidischer Form gebundenem Eisen, somit eisenhaltig.

Aus der EP 3 375 764 A1 ist ein Verfahren zur Behandlung von metallurgischen Schlacken bekannt, welches kostengünstig umsetzbar ist. US 2021/301359 offenbart ein Verfahren zum Schmelzen von DRI in einem Elektrolichtbogenofen.

Des Weiteren ist auch eine Rückgewinnung des in einer Schlacke in oxidischer Form gebundenen Eisens in einem Hochofenprozess bekannt, vgl. Publikation von Algermissen unter https://www.vivis.de/wp-content/uploads/MNA5/2018_MNA_298-309_Algermissen.

Aufgabe der vorliegenden Erfindung ist es, ein gattungsgemäßes Verfahren derart weiterzuentwickeln, um vorhandene energetisch und stofflich wertvolle eisenhaltige Schlacke aus einem oxidierenden Prozess kommend weiter wirtschaftlich zu verwerten.

Diese Aufgabe wird gelöst durch ein Verfahren zum Herstellen einer eisenbasierten Schmelze in einem elektrischen Einschmelzer, wobei dem Einschmelzer Eisenschwamm und/oder eisenhaltiger Schrott und optional weitere Zusatzstoffe zugeführt werden, wobei dem Einschmelzer eisenhaltige Schlacke zugeführt wird und das Herstellen der eisenbasierten Schmelze in einer reduzierenden Atmosphäre durchgeführt wird.

Die Erfinder haben überraschend festgestellt, dass Schlacke aus einem chemisch oxidierend betriebenen Prozess, wie zum Beispiel aus einem EAF- und/oder BOF-Prozess stammend, eine Schlackenchemie mit FeO-Gehalten aufweist, wobei Gehalte in Form Fe₂O₃ und/oder Fe₃O₄ in Summe größer als 10 Gew.-%, insbesondere größer als 12 Gew.-%, vorzugsweise größer als 15 Gew.-% vorhanden sind, weiter wirtschaftlich verwertet wird, wenn das Herstellen der eisenbasierten Schmelze in einer reduzierenden Atmosphäre durchgeführt wird, so dass die eisenbasierte Schlacke hinsichtlich ihres Eisengehalts reduziert wird, was eine zusätzliche Eisenausbeute beim elektrischen Erschmelzen zur Folge hat, insbesondere ohne eine aufwendige Schlackenaufbereitung durchführen zu müssen. Auch die in der Schlacke enthaltenen weiteren Stoffe, wie zum Beispiel Si aus SiO₂ und Al aus Al₂O₃, sowie die in der Schlacke enthaltenden Zuschlagstoffe, wie zum Beispiel Kalk (CaO), können somit recycelt und stofflich verwertet werden.

In der reduzierenden Atmosphäre des elektrischen Einschmelzers kann die im Einschmelzprozess resultierende Schlacke aufgrund der Bildung von reduzierten Gasen, wie zum Beispiel CO, insbesondere schaumig werden, wodurch sie die darunter befindliche eisenbasierte Schmelze nach oben hin gut isolieren und beispielsweise die Elektrode(n) des elektrischen Einschmelzers schützen kann.

Eisenschwamm (direct reduced iron DRI) aus Eisenerz wird in einem Direktreduktionsprozess durch Beaufschlagen mit einem Reduktionsgas hergestellt, so dass Sauerstoff dem Eisenerz entzogen und der Metallisierungsgrad des Eisens im Eisenschwamm erhöht werden kann, beispielsweise auf mindestens 75%, insbesondere auf mindestens 80%, vorzugsweise auf mindestens 85%, bevorzugt auf mindestens 90%, besonders bevorzugt auf mindestens 95%, wobei der Metallisierungsgrad u. a. von der Verweildauer im Direktreduktionsprozess abhängen kann. Der Eisenschwamm kann kalt oder warm dem Direktreduktionsprozess abgezogen und auch entsprechend kalt oder warm in den elektrischen Einschmelzer chargiert werden. Der Eisenschwamm kann auch in einer Zwischenstufe nach dem Reduktionsprozess in einen sogenannten Brikettierungsprozess überführt werden, in welchem der Eisenschwamm zu Eisenschwamm-Briketts (hot briquetted iron HBI) heiß kompaktiert und anschließend beispielsweise bis zur Verwendung gelagert wird. Der Direktreduktionsprozess zur Herstellung von Eisenschwamm aus Eisenerz und der Brikettierungsprozess sind in Fachkreisen bekannt.

Insbesondere alternativ oder bevorzugt kann zusätzlich zur Zufuhr von Eisenschwamm, insbesondere um die Recyclingrate zu steigern, eisenhaltiger Schrott, welcher vorzugsweise entsprechend aufbereitet sein kann, dem elektrischen Einschmelzer zugeführt werden. Der Anteil an eisenhaltigem Schrott kann mindestens 1 Gew.-%, insbesondere mindestens 2 Gew.-%, vorzugsweise mindestens 3 Gew.-% auf die Gesamtmasse der erzeugten bzw. zu erzeugenden eisenhaltigen Schmelze und beispielsweise maximal 30 Gew.-%, insbesondere maximal 20 Gew.-%, vorzugsweise mindestens 10 Gew.-%, bevorzugt mindestens 8 Gew.-% betragen.

Optionale weitere Zusatzstoffe können Schlackenbildner, wie zum Beispiel Kies, Sand und/oder Dolomit; und/oder Kohlenstoffträger, wie zum Beispiel Kohle, Biokohle, Biomasse, biogene und/oder nicht biogene Reststoffe (Kunststoffe) oder Siedlungsabfallfraktionen sein, insbesondere in Summe bis zu 200 kg pro Tonne auf die Gesamtmasse der erzeugten bzw. zu erzeugenden eisenhaltigen Schmelze betragen.

Der elektrische Einschmelzer ist als ein Elektroreduktionsofen ausgeführt. Elektroreduktionsöfen (Submerged Electric Arc Furnace SAF) sind Schmelzöfen mit Lichtbogen-Widerstandserwärmung, welche Lichtbögen zwischen der Elektrode bzw. die Elektroden und der Charge und/oder der Schlacke bilden oder welche die Charge und/oder die Schlacke mittels Joule-Effekt erwärmen. Beim SAF ist die Elektrode (bzw. sind die Elektroden, wenn mehrere vorhanden sind) in die Charge und/oder Schlacke eingetaucht. Je nach Funktionsprinzip/Betriebsweise kann der Elektroreduktionsofen als Wechselstrom-Reduktionsofen (SAFac) oder Gleichstrom-Reduktionsofen (SAFdc) ausgeführt sein. Hiervon weicht das Funktionsprinzip/Betriebsweise zu den elektrischen Einschmelzern mit direkter Lichtbogeneinwirkung (Electric Arc Furnace EAF) ab, welche Lichtbögen zwischen der Elektrode und Charge/Schlacke bilden. Dies umfasst den Wechselstrom-Lichtbogen-Schmelzofen (EAFac), den Gleichstrom-Lichtbogen-Schmelzofen (EAFdc) und den Pfannenofen (Ladle Furnace LF). Der Vorteil bei der Verwendung von Elektroreduktionsöfen mit Lichtbogen-Widerstandserwärmung (SAF) ist, dass diese mit einer reduzierenden Atmosphäre betrieben werden, wohingegen Schmelzöfen mit direkter Lichtbogeneinwirkung (EAF) mit einer oxidierenden Atmosphäre betrieben werden. Die einzelnen genannten Aggregate und entsprechenden Verfahren sind Stand der Technik und in der Praxis etablierte Prozesse.

Gemäß einer Ausgestaltung der Erfindung wird die eisenhaltige Schlacke im erstarrten Zustand in den elektrischen Einschmelzer zugeführt. Insbesondere kann bei der aus dem chemisch oxidierend betriebenen Prozess stammende Schlacke zugelassen werden, dass die aus dem Prozess, in der Regel, noch flüssige Schlacke in einem geeigneten Umfeld, beispielsweise in einem Schlackenbeet, abkühlt und somit erstarrt. Zur Weiterprozessierung ist oftmals eine Zerkleinerung sinnvoll, so dass die erstarrte Schlacke vorzugsweise als "Schreddergut" zugeführt werden kann, wodurch die Handhabung wie auch Verarbeitung im Einschmelzer vereinfacht werden kann.

Gemäß einer alternativen Ausgestaltung der Erfindung wird die eisenhaltige Schlacke im flüssigen Zustand in den elektrischen Einschmelzer zugeführt. Das bevorzugte Zuführen der flüssigen Schlacke senkt zum einen den Energiebedarf, da diese bereits im flüssigen Zustand vorliegt und eingebracht wird, und zum anderen vermischt sich die flüssige Schlacke besser mit den restlichen Zugaben im elektrischen Einschmelzer.

Gemäß einer Ausgestaltung der Erfindung wird das im elektrischen Einschmelzer entstandene Prozessgas abgeführt und kann als Teilgasstrom zum Befeuern eines Reduktionsgaserwärmers für einen Direktreduktionsprozess und/oder als Teilgasstrom eines Reduktionsgases für einen Direktreduktionsprozess bereitgestellt werden. Das im elektrischen Einschmelzer entstandene Prozessgas kann energetisch genutzt werden, unter anderem wenn auch am gleichen Standort ein Direktreduktionsprozess zum Herstellen von Eisenschwamm aus Eisenerz integriert ist, so dass das aus dem elektrischen Einschmelzer abgeführte Prozessgas als Teilgasstrom zum Befeuern eines Reduktionsgaserwärmers für einen Direktreduktionsprozess bereitgestellt werden kann. Um ein effektives Verrichten der Reduktionsarbeit in einem Direktreduktionsprozess zu gewährleisten, wird das verwendete Reduktionsgas vor dem Einleiten auf eine bestimmte Prozesstemperatur erwärmt. Dazu werden konventionelle Gaserwärmer, beispielsweise nach dem Wärmetauschprinzip arbeitend, eingesetzt, so dass die zum Erwärmen benötigte Energie beispielsweise als Teilgasstrom aus dem elektrischen Einschmelzer abgeführt und bereitgestellt werden kann. Zusätzlich oder alternativ kann das aus dem elektrischen Einschmelzer abgeführte Prozessgas auch als Teilgasstrom eines Reduktionsgases bereitgestellt werden.

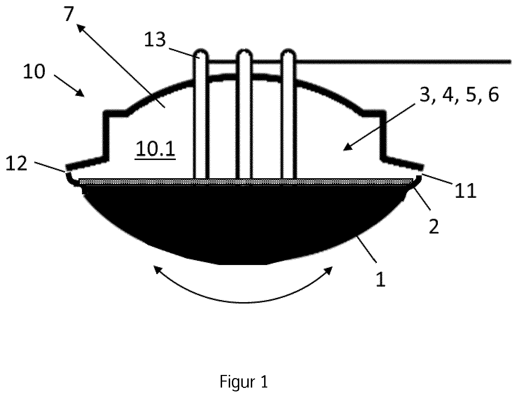

Näher erläutert wird die Erfindung anhand eines Ausführungsbeispiels in Verbindung mit der Figur 1. Dabei zeigt die Figur 1 ein Beispiel eines erfindungsgemäßen Verfahrens an einer schematischen Darstellung eines elektrischen Einschmelzers (10) zum Herstellen einer eisenbasierten Schmelze (1). Neben der eisenbasierten Schmelze (1) entsteht im Einschmelzprozess eine die eisenbasierte Schmelze (1) abdeckende Schlacke (2) sowie ein Prozessgas (7), welches abgeführt werden kann und beispielsweise einem hier nicht dargestellten Teilgasstrom zum Befeuern eines Reduktionsgaserwärmers für einen Direktreduktionsprozess und/oder Teilgasstrom eines Reduktionsgases für einen Direktreduktionsprozess bereitgestellt werden kann. Vorzugsweise ist eine entsprechende Direktreduktionsanlage (hier nicht dargestellt) am gleichen Standort wie der elektrische Einschmelzer (10) vorgesehen. Eisenschwamm (4), welcher zunächst in einem Direktreduktionsprozess, vorzugsweise in einer vor Ort angesiedelten Direktreduktionsanlage, aus Eisenerz erzeugt worden ist, wird in Form von DRI und/oder HBI dem elektrischen Einschmelzer (10) als bevorzugter Haupteisenträger zur Herstellung der eisenbasierten Schmelze (1) zugeführt. Des Weiteren wird auch eisenhaltige Schlacke (3), welche aus einem hier nicht näher dargestellten chemisch oxidierend betriebenen Prozess, wie zum Beispiel aus einem EAF- und/oder besonders bevorzugt BOF-Prozess stammt, weiter bevorzugt im flüssigen Zustand in den elektrischen Einschmelzer (10) zugeführt. Alternativ kann die eisenhaltige Schlacke (3) auch im erstarrten Zustand in den elektrischen Einschmelzer (10) zugeführt werden. Zusätzlich können auch eisenbasierter Schrott (5) und bei Bedarf, somit optional, auch weitere Zusatzstoffe (6) zugeführt werden.

Zu Beginn des Einschmelzprozesses liegen die meisten Zugaben im Wesentlichen in festem Zustand vor, so dass die Elektroden (13), hier drei Elektroden symbolisch gezeigt, in die Charge eintauchen, um vorzugsweise durch Widerstandserwärmung die Charge einzuschmelzen. Der elektrische Einschmelzer (10) wird mit einer reduzierenden Atmosphäre (10.1) betrieben, so dass die oxidischen Eisengehalte in der zugeführten eisenbasierten Schlacke (3) in Eisen umgewandelt werden und auch noch bei unvollständig reduziertem Eisenschwamm (4) die Eisenausbeute in der eisenbasierten Schmelze (1) erhöhen. Am Ende des Einschmelzprozesses hat sich eine eisenbasierte Schmelze (1) und oberhalb dieser flüssigen Schlacke (2) gebildet. Die flüssigen Bestandteile (1, 2) müssen für die Weiterprozessierung voneinander getrennt werden und die Schlacke (2) wird durch Schwenken des elektrischen Einschmelzers (10) beispielhaft nach links über eine Öffnung (12) vergossen. Anschließend wird durch Schwenken nach rechts die eisenbasierte Schmelze (1) über die Öffnung (11) vergossen und somit der elektrische Einschmelzer (10) im Wesentlichen teilweise oder vollständig entleert. Das Schwenken des elektrischen Einschmelzers (10) ist durch einen Doppelpfeil symbolisiert.

Anschließend wird der elektrische Einschmelzer (10) neu befüllt und der Einschmelzprozess wiederholt sich, hier nicht dargestellt. Die über die Öffnung (12) vergossene Schlacke (2) wird beispielsweise in einem geeigneten Gefäß aufgefangen und einer Weiterprozessierung zugeführt, hier nicht dargestellt. Die über die Öffnung (11) vergossene eisenbasierte Schmelze (1) wird beispielsweise in einem geeigneten Gefäß aufgefangen und einer Sekundärmetallurgie, bevorzugt einem BOF-Prozess, zur weiteren Konditionierung zugeführt, hier nicht dargestellt. Anschließend kann die entsprechend konditionierte Schmelze zu Halbzeugen, wie zum Beispiel zu Flach- oder Langprodukten, vergossen werden.

## Patentansprüche

1. Verfahren zum Herstellen einer eisenbasierten Schmelze (1) in einem elektrischen Einschmelzer (10), wobei dem Einschmelzer (10) Eisenschwamm (4) und/oder eisenhaltiger Schrott (5) und optional weitere Zusatzstoffe (6) zugeführt werden, **dadurch gekennzeichnet, dass** dem Einschmelzer (10) eisenhaltige Schlacke (3) zugeführt wird und das Herstellen der eisenbasierten Schmelze (1) in einer reduzierenden Atmosphäre (10.1) durchgeführt wird, wobei die Schlacke (3) aus einem chemisch oxidierend betriebenen Prozess stammt und Gehalte in Form von Fe₂O₃ und/oder Fe₃O₄ in Summe größer als 10 Gew.-% aufweist.

2. Verfahren nach Anspruch 1, wobei die Schlacke (3) aus einem EAF-Prozess stammt.

3. Verfahren nach Anspruch 1, wobei die Schlacke (3) aus einem BOF-Prozess stammt.

4. Verfahren nach einem der vorgenannten Ansprüche, wobei die eisenhaltige Schlacke (3) im erstarrten Zustand in den elektrischen Einschmelzer (10) zugeführt wird.

5. Verfahren nach einem der Ansprüche 1 bis 3, wobei die eisenhaltige Schlacke (3) im flüssigen Zustand in den elektrischen Einschmelzer (10) zugeführt wird.

6. Verfahren nach einem der vorgenannten Ansprüche, wobei ein Metallisierungsgrad des Eisens im Eisenschwamm (4) mit mindestens 75% vorliegt.

7. Verfahren nach einem der vorgenannten Ansprüche, wobei zur Zufuhr von Eisenschwamm (4) zusätzlich eisenhaltiger Schrott (5) mit einem Anteil von mindestens 1 Gew.-% und maximal 30 Gew.-%, bezogen auf die Gesamtmasse der erzeugten bzw. zu erzeugenden eisenbasierte Schmelze (1), zugeführt wird.

8. Verfahren nach einem der vorgenannten Ansprüche, wobei Schlackebildner als Zusatzstoffe, welche in Summe bis zu 200 kg pro Tonne auf die Gesamtmasse der erzeugten bzw. zu erzeugenden eisenhaltigen Schmelze (1) betragen können, zugeführt werden

9. Verfahren nach einem der vorgenannten Ansprüche, wobei das im elektrischen Einschmelzer (10) entstandene Prozessgas (7) abgeführt wird und als Teilgasstrom zum Befeuern eines Reduktionsgaserwärmers für einen Direktreduktionprozess und/oder als Teilgasstrom eines Reduktionsgases für einen Direktreduktionprozess bereitgestellt werden kann.

## Claims

1. Method for producing an iron-based melt (1) in an electric smelter (10), wherein sponge iron (4) and/or ferrous scrap (5) and optionally further additives (6) are fed into the smelter (10), **characterized in that** iron-containing slag (3) is fed into the smelter (10) and the iron-based melt (1) is produced in a reducing atmosphere (10.1), wherein the slag (3) originates from a chemically oxidizing process and has a total content of Fe₂O₃ and/or Fe₃ O₄ in a total amount greater than 10 wt%.

2. Method according to claim 1, wherein the slag (3) originates from an EAF process.

3. Method according to claim 1, wherein the slag (3) originates from a BOF process.

4. Method according to one of the preceding claims, wherein the iron-containing slag (3) is fed into the electric smelter (10) in a solidified state.

5. Method according to one of claims 1 to 3, wherein the iron-containing slag (3) is fed into the electric smelter (10) in a liquid state.

6. Method according to one of the preceding claims, wherein the degree of metallization of the iron in the sponge iron (4) is at least 75%.

7. Method according to one of the preceding claims, wherein iron-containing scrap (5) with a proportion of at least 1 wt% and a maximum of 30 wt%, based on the total mass of the iron-based melt (1) produced or to be produced, is additionally fed in to feed in sponge iron (4).

8. Method according to one of the preceding claims, wherein slag formers are added as additives, which in total can amount to up to 200 kg per ton of the total mass of the iron-containing melt (1) produced or to be produced.

9. Method according to one of the preceding claims, wherein the process gas (7) produced in the electric smelter (10) is discharged and can be provided as a partial gas stream for the firing of a reduction gas heater for a direct reduction process and/or as a partial gas stream of a reduction gas for a direct reduction process.

## Revendications

1. Procédé de fabrication d'une fusion à base de fer (1) dans un four électrique de fusion (10), dans lequel sont introduits dans le four de fusion (10) du fer spongieux (4) et/ou de la ferraille contenant du fer (5) et éventuellement d'autres additifs (6), **caractérisé en ce que** de la laitier contenant du fer (3) est introduit dans le four de fusion (10) et que la fabrication de la fusion à base de fer (1) est effectuée dans une atmosphère réductrice (10.1), le laitier (3) provenant d'un procédé fonctionnant chimiquement en mode oxydant et présentant des teneurs sous forme de Fe₂ O₃ et/ou Fe₃ O₄ supérieures à 10 % en poids au total.

2. Procédé selon la revendication 1, dans lequel le laitier (3) provient d'un procédé EAF.

3. Procédé selon la revendication 1, dans lequel le laitier (3) provient d'un procédé BOF.

4. Procédé selon l'une des revendications précédentes, dans lequel le laitier contenant du fer (3) est introduit à l'état solidifié dans le four de fusion électrique (10).

5. Procédé selon l'une des revendications 1 à 3, dans lequel le laitier contenant du fer (3) est introduit à l'état liquide dans le four de fusion électrique (10).

6. Procédé selon l'une des revendications précédentes, dans lequel le degré de métallisation du fer dans le fer spongieux (4) est d'au moins 75 %.

7. Procédé selon l'une des revendications précédentes, dans lequel, en plus de l'introduction de fer spongieux (4), de la ferraille contenant du fer (5) est introduite avec une proportion d'au moins 1 % en poids et au plus 30 % en poids, rapportée à la masse totale de la fusion à base de fer (1) produite ou à produire.

8. Procédé selon l'une des revendications précédentes, dans lequel des formateurs de laitier sont introduits en tant qu'additifs, lesquels peuvent représenter au total jusqu'à 200 kg par tonne, rapportés à la masse totale de la fusion contenant du fer (1) produite ou à produire.

9. Procédé selon l'une des revendications précédentes, dans lequel le gaz de procédé (7) formé dans le four électrique de fusion (10) est évacué et peut être mis à disposition comme flux partiel de gaz pour l'alimentation d'un réchauffeur de gaz réducteur destiné à un procédé de réduction directe et/ou comme flux partiel d'un gaz réducteur destiné à un procédé de réduction directe.
